# EUROPEAN PATENT APPLICATION

(11) **EP 1 269 834 A1**
(43) Date of publication of application: **02.01.2003**
(21) Application number: 01903808.2
(22) Date of filing: 13.02.2001
(51) Int. Cl.: A01K 61/00, A01K 71/00, A01K 73/12

(54) **INFLATABLE PNEUMATIC SUPPORT FOR FLOATING CAGES USED TO STORE AND/OR TRANSPORT SEA FISH SPECIES**

(71) Applicant: Gines Mendez Espana, S.L., 30870 Mazarron (Murcia) (ES)
(72) Inventor: MENDEZ ALCALA, Ginés, José, E-30870 Mazarron (ES)
(74) Representative: Perez Bonal, Bernardo
(86) International application number: ES0100049
(87) International publication number: WO02063950

(57) **Abstract**

Inflatable pneumatic support (1) for floating cages for sustaining and/or transporting marine ichthyologic species, employed for constituting a dismountable floating cage that can be transported in an auxiliary ship to be subsequently assembled during the fishing process and prior to the arrival of the towing vessels.

These cages serve to sustain life during the waiting period until the towing vessels arrive with the auxiliary cages; and, should it be necessary, can also perform the function of transporting cages. This support (1) comes with anchoring elements (2) and (3) adequate for transporting it as well as for holding the marker devices.

## Description

### PURPOSE OF THE INVENTION

The invention proposed herein relates to an inflatable pneumatic support for floating cages for sustaining and / or transporting marine ichthyologic species.

This support is characterised by the presence of nipples for retaining the net below as well as miscellaneous anchoring elements for securing of the assembly or its transport.

The cage formed with this support has a perimeter cable for the attachment of the net.

### BACKGROUND OF THE INVENTION

At the present time fishing work requires a specific high sea fleet consisting fundamentally of fishing boats, towing vessels and a number of auxiliary ships.

The fishing boats known also for the work they perform as circling boats are those which carry the nets and their essential task is to lay out and to collect in the nets in the sea guaranteeing the fishing catch.

To this end they have the support of the auxiliary ships used also for transporting the personnel.

When carrying out the fishing process, the species caught are deposited in auxiliary floating cages to be transported later to fixed cages for fattening.

The towing vessels are those which perform such transportation task.

When the auxiliary cage is holding a sufficient number of species, the towing vessel transports the cage to the location of the fish farm and then returns once more to the fishing area.

The catching process has major drawbacks for the fishing industry if the distance is recalled that usually separates the fish farms from the fishing grounds (more than 45 km.).

To this distance must be added the inconvenience of transporting the auxiliary cage, which compels the towing vessels to proceed at very reduced speeds, due both to the size of the cage and to the care which must be taken in the transporting to keep the species contained therein from dying.

The outcome of the foregoing is that the fishing boat must remain on station without fishing until the return of the towing vessel once it has released the caught fish in the fixed cages.

The Patent document published under number WO/98/31217 describes a cage specially designed for the farming of "flat" fish, the farming of which requires the availability of a lower, flat, stable surface.

The interest of the document is centred principally on a mechanism mounted on the base which permits said base to be raised for the removal of the fish resting thereupon, maintaining it all the while horizontal and flat.

On the other hand, the Patent document published under application number P9502250 describes the use of a cage formed by means of interconnected flexible tubes and a double net, having likewise means for the easy transfer of the fish from the capture nets into the cage, or from said cage into the farming cages.

The use of this net consists mainly in the transfer of the fish from the capture zone to the farming cages situated near the coast.

The applicant presents a novel technique for the auxiliary support of the species which is now described, of those of which the existence is unknown up to the present date.

### DESCRIPTION OF THE INVENTION

The invention proposed herein consists of an inflatable pneumatic support for sustaining and/or transporting marine ichthyogic species in floating cages from among all those means of supporting and/or transporting marine species.

Said support is distinguished by its ease of transporting and speed with which it is assembled and dismantled.

The support in itself is comprised of a main tubular body which serves as a pneumatic float when filled with air or any other gas by inflation.

This float supports the net which serves as a cage for the catches that it is desired either to transport or to sustain while waiting to be taken to their final cage making use of the auxiliary cages of the towing vessels.

The net forms a container the outer rim of which is wrapped over the tubular body by means of a fold which has its extremity joined to the net by means of a cable positioned below and parallel to the float.

The float has on top a plurality of equally spaced nipples which prevent the net from sliding on top over the tubular body that constitutes the float; and the different types of anchoring elements that the tubular body has are capable of maintaining the same position.

These anchoring elements are two in number, one below with rings for hooking on to the assembly and permitting for example its transportation, or securing it in a determined location, and the other on the side for the insertion of marker devices that help to locate the limits of the net.

The assembly formed by the float and the net can be transported by an auxiliary ship since when the float is not inflated, its volume is reduced.

When the fleet reaches the fishing grounds the circling boats start the fishing work while the auxiliary ships engage in the assembly of the pneumatic supports and nets that they have previously been transporting.

The catches obtained are deposited in these cages formed by the pneumatic support and its net until the towing vessels that are sail at a slower speed because they are pulling the auxiliary cages arrive at the fishing area.

When the towing vessels reach the fishing area, the pneumatic supports with net have already served as a temporary deposit and hold a sufficient number of species to take them to the auxiliary cages and be towed to the fixed cages of the fish farm for fattening.

The pneumatic supports with net which have been emptied of species and remain in the fishing area allow the work of fishing to continue whilst the towing vessels make the voyage to the fish farm and return to the fishing grounds.

This voyage usually lasts several days given the typical distance that lies between the fish farm and the fishing grounds, and the limited speed reached by the towing vessels with the auxiliary cage.

Should it prove necessary, these same floating supports together with their net, can fulfil the same role as the auxiliary cages employed by the towing vessels for the transport of the catches to the fixed cages.

Once the fishing season is over, the pneumatic supports are taken in by the auxiliary ships, deflated and transported to the shore for maintenance, repair and storage until the next fishing season.

### DESCRIPTION OF THE DRAWINGS

This descriptive specification is completed with a set of drawings, which illustrate the preferred embodiment of the invention in a non-restrictive manner.

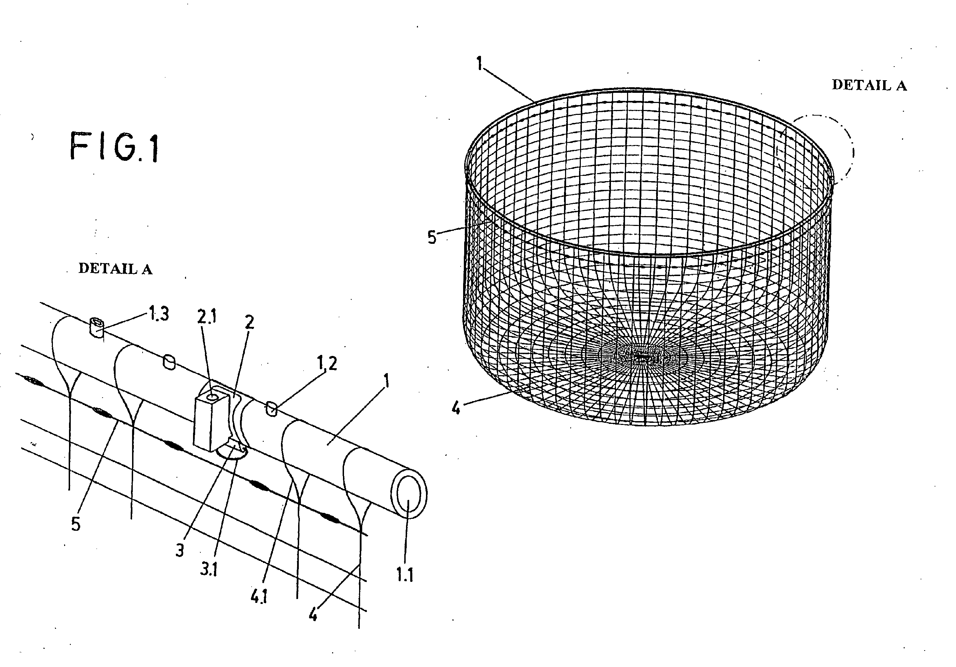

Figure 1, the only one, shows a view of the net together with its pneumatic support showing a detail (A) of the union between the two as well as the accessories with which the support is fitted.

### PREFERRED EMBODIMENT OF THE INVENTION

In the light of the foregoing statements, the present invention relates to an inflatable pneumatic support for sustaining and/or transporting marine ichthyologic species in floating cages.

Figure 1 shows an embodiment of the pneumatic support (1) with the net (4) incorporated in order to constitute the cage.

This same figure shows a detail (A) of the union as well as the accessories with which this pneumatic support (1) is equipped.

The pneumatic support (1) is formed by a body (1.1) mainly tubular and inflatable through a valve (1.3).

This tubular body (1.1) comes with a plurality of nipples (1.2) arranged on top in order to prevent the slipping of the upper fold (4.1) of the net (4) over it.

After the fold (4.1), the rim of the net (4) is secured by means of a perimeter cable (5) below the pneumatic tubular body (1.1).

The pneumatic body (1.1) also has some anchoring elements (3) with ring (3.1) on the under side for hooking on to the assembly.

The pneumatic tubular body (1.1) also has a side anchoring element (2) with support (2.1) for mounting markers.

The essential nature of this invention is not altered by variation in materials, form, size and arrangement of the constituent elements, described in a non-restrictive manner, sufficient for an expert in the subject to proceed to its replication.

## Claims

1. Inflatable pneumatic support for floating cages for sustaining and/or transporting marine ichthyologic species, from among those floating supports employed in the erection of dismountable cages for temporary storage of species caught by the trapping boats, **characterised in that** it is formed by a mainly tubular pneumatic body (1.1), inflatable through a valve (1.3); which has some nipples (1.2) uniformly spaced on the top side for securing a net (4), preventing it from slipping, the hem of said net surrounding the tubular support (1.1) by means of a fold (4.1) fastened by a cable (5) below and parallel to the tubular body (1.1); and moreover having anchoring elements (3) with ring (3.1) for towing or fastening said support as well as lateral anchoring elements (2) with bracket (2.1) for mounting marker devices.
